## Europäisches Patentamt

## European Patent Office

## Office européen des brevets

(19)

(11) Veröffentlichungsnummer: **0 080 084**
**A1**

(12) **EUROPÄISCHE PATENTANMELDUNG**

(21) Anmeldenummer: **82110117.7**

(22) Anmeldetag: **03.11.82**

(51) Int. Cl.³: **G 01 N 27/84**

(30) Priorität: **13.11.81 DE 3145090**

(43) Veröffentlichungstag der Anmeldung: **01.06.83**
**Patentblatt 83/22**

(84) Benannte Vertragsstaaten: **BE FR GB IT LU NL**

(71) Anmelder: **Klaus Henrichs GmbH, Carl-Isert-Weg 11,
D-4290 Bocholt (DE)**

(72) Erfinder: **Walther, Ronald G., Südtiroler Ring 22,
D-6719 Weisenheim a. Berg (DE)**
Erfinder: **Knickel, Wilfried, Lochweg 3,
D-6719 Kerzenheim (DE)**

(74) Vertreter: **Fischer, Wolf-Dieter, Dipl.-Ing., Patentanwälte
Dipl.-Ing. A.H. Fischer Dipl.-Ing. W.D. Fischer
Kurfürstenstrasse 32, D-6700 Ludwigshafen/Rhein (DE)**

(54) **Verfahren und Einrichtung zum Prüfen magnetisierbarer Bauteile.**

(57) Verfahren zum Prüfen magnetisierbarer Bauteile, die durch von außen einwirkende elektrische Ströme oder Magnetfelder in einen magnetischen Zustand versetzt werden, wobei auf die zu prüfenden Stellen der Bauteile ein Träger aufgebracht wird, der magnetisierbare, feinverteilte Teilchen enthält, wobei die in getrennten Kammern (1, 2) eines schlauchförmigen Behälters (3) enthaltenen Gemische von festen pulverisierten Stoffen, unter denen sich Eisenpulver befindet, sowie von Flüssigkeiten, nach Aufbrechen der Trennwände innig miteinander vermischt werden, worauf der Behälter (3) auf die zu prüfende Stelle aufgelegt und dort gut anliegend befestigt wird und hernach ein für die Prüfung vorgesehenes Magnetfeld eingeschaltet wird.

Klaus He nrichs GmbH

- 1 -

## Verfahren und Einrichtung zum Prüfen magnetisierbarer Bauteile

Die Erfindung bezieht sich auf ein Verfahren zum Prüfen magnetisierbarer Bauteile auf Fehler, wobei auf die zu prüfenden Stellen der Bauteile ein magnetisierbare Teilchen enthaltender Träger aufgebracht wird, wonach im Bereich der zu prüfenden Stellen ein für die Prüfung vorgesehenes Magnetfeld angelegt wird.

Man braucht bei einer derartigen Prüfung einen Arbeitsvorgang, der an den zu prüfenden Bauteilen nichts zerstört und es ist ferner notwendig, eine Dokumentation der Prüfergebnisse zu erhalten. Zu diesem Zweck werden üblicherweise diese magnetisierbaren Bauteile durch von außen einwirkende Ströme oder Magnetfelder in einen magnetischen Zustand versetzt. Wenn in der Oberfläche dieser Bauteile oder dicht unter der Oberfläche derselben Fehler vorhanden sind, dann werden magnetische Feldlinien aus der Oberfläche herausgedrängt. Dabei wird als Indikator für die auf diese Art und Weise gefundenen Fehlerstellen üblicherweise gefärbtes Eisenpulver verwendet, denn dieses sammelt sich an derartigen Stellen raupenförmig an und ist aus diesem Grund mit bloßem Auge erkennbar. Bei der Prüfung wird ein solches Eisenpulver entweder trocken aufgestäubt, oder in wässriger oder öliger Suspension aufgespült. Das dabei entstehende Bild der Verteilung des Eisenpulvers wird entweder bei normalem Licht oder unter Beleuchtung mit ultraviolettem Licht betrachtet, nämlich dann, wenn fluoreszierendes Eisenpulver Verwendung findet. Diese Prüfmethode ist in DIN 54 130 und 54 131 beschrieben und es sei hierzu insbesondere auf DIN 54 130, Seite 331, 3.1.1 und 3.1.3 verwiesen. Bezüglich des Verfahrens ist auch zu vergleichen Seite 332.4.3.

In den Unterlagen für Unterricht bezüglich Magnetstreuflußprüfung herausgegeben von der Deutschen Gesellschaft für zerstörungsfreie Prüfung e.V. im Jahre 1978, wird auf den Seiten 36 und 37

- 3 -

das bekannte Verfahren beschrieben, mit Hilfe von Magnetpulver ein Streufeld nachzuweisen, wonach also auf die Oberfläche magnetisierter Prüfobjekte magnetisierbare Teilchen aufgebracht werden, so daß Streufelder über Oberflächenfehlern durch Pulveransammlungen nachgewiesen werden. Aus der Breite der Pulverraupe kann aber nicht die Tiefe der Fehlstelle abgeschätzt werden, doch liefert das Magnetpulververfahren ein anschauliches Bild des Fehlerverlaufs und der Fehlerhäufigkeit. Diese Methode erfordert aber umfangreiche Apparaturen, um entweder optisch, elektronisch oder fotographisch eine Speicherung durchzuführen.

Für diese Magnetpulverprüfung muß man daher für die Auswertung am Prüfort eine abgedunkelte Kabine vorsehen, oder wenn es sich um eine Prüfung unter Wasser handelt, direkt am Bauteil. Das Bild der Eisenpulververteilung irgendwie festzuhalten, z. B. durch eine Fotographie, ist nur in ganz seltenen Fällen möglich, weil meistens das Prüfergebnis nicht dokumentarisch festgehalten werden kann. Dabei ergeben sich besonders große Schwierigkeiten, wenn die Prüfung unter Wasser durchgeführt werden muß, z. B. an Bohrplattformen, an Schiffen od. dgl. . Man muß dann, wegen der schlechten Sichtverhältnisse unter Wasser, meistens mit fluoreszierendem Eisenpulver arbeiten, welches während des Magnetisierungsvorganges auf die zu untersuchende Stelle aufgesprüht wird. Dabei wird natürlich nicht alles Pulver von der Oberfläche angezogen, sondern ein Teil entweicht in die Umgebung, so daß sich unter ultravioletter Beleuchtung eine leuchtende Wolke bildet, die die Betrachtung und auch das Fotografieren schwierig gestaltet. Diese nicht sehr einfachen Arbeiten können nur selten von Tauchern mit normaler Ausbildung durchgeführt werden und Taucher, die gleichzeitig auch Fachleute für solche zerstörungsfreie Prüfungen sind, stehen kaum zur Verfügung. Auch dadurch wird ein Einsatz dieses bekannten Verfahrens selten möglich sein.

- 3 -

Wenn Prüfungen von Konstruktionen unter Wasser durchgeführt werden müssen, wird auch manchmal so vorgegangen, daß man durch Auflegen eines dicken, tonbandähnlichen Bandes das Magnetbild festhält. Ein solches Band wird dann über Wasser mittels einer umfangreichen, kostspieligen elektronischen Einrichtung gelesen, die das ursprüngliche Magnetbild rekonstruiert. Auch die Anwendung eines solchen Verfahrens ist nicht nur schwierig, sondern auch sehr kompliziert, weil sich das Band nicht allen Unebenheiten der Oberfläche anpaßt und Fehler, schon wegen der unterschiedlichen Abstände zur Oberfläche des zu prüfenden Bauteils, mit unterschiedlicher Intensität angezeigt werden. Dazu kommt noch , daß bei Abnehmen des Bandes, wegen einer dem Material eigenen Remanenz, das Magnetbild verrutschen kann, was naturgemäß zu einer fehlerhaften Rekonstruktion im Registrierstreifen führen kann.

Die Erfindung hat sich daher die Aufgabe gestellt, ein Verfahren zu schaffen, um ein Bild der Eisenpulververteilung unzerstörbar festzuhalten, so daß es an einem anderen als dem Prüfort, auch über längere Zeit, betrachtet und beurteilt werden kann.

Die Lösung dieser Aufgabe wurde erfindungsgemäß nun dadurch ermöglicht, daß die in getrennten Kammern eines dem Träger verkörperten schlauchförmigen Behälters enthaltenen Gemische von festen pulverisierten Stoffen, nämlich ein Gemisch aus Calciumoxyd, Calciumsulfat, Zinkoxyd, Siliciumdioxyd und Eisenpulver sowie von Flüssigkeiten, nämlich eine wässrige Lösung von Alkalisilikaten, Wasserstoffperoxyd, Phosphorsäure und Formaldehyd, nach Aufbrechen der Trennwände innig miteinander vermischt werden und daß die in den Kammern befindlichen flüssigen und festen Bestandteile in ihrem Mischungsverhältnis so bemessen sind, daß die festen und flüssigen Bestandteile in vorbestimmter Zeit erstarren und keine Bewegung der Eisenteilchen mehr erfolgen kann, so daß das Verteilungsbild dadurch fixiert und visuell direkt ablesbar ist.

Klaus Henrichs GmbH

- 4 -

Eine Einrichtung zum Durchführen des Verfahrens, also zum Prüfen magnetisierbarer Bauteile auf Fehler besteht erfindungsgemäß darin, daß als Träger ein schlauchförmiger Behälter vorgesehen ist, aufgebaut aus einer bandförmigen Folie, auf der Folienkappen aneinandergereiht angebracht sind, während innerhalb jeder so gebildeten Kammer durch dort auf die Folie aufgesetzte Folienkappen zwei aufbrechbare Kammern vorgesehen sind und daß in den Kammern die festen pulverisierten Stoffe, nämlich ein Gemisch aus Calciumoxyd, Calciumsulfat, Zinkoxyd, Siliciumdioxyd und Eisenpulver bzw. die Flüssigkeiten, nämlich eine wäsrige Lösung von Alkalisilikaten, Wasserstoffperoxad, Phosphorsäure und Formaldehyd, enthalten sind.

In manchen Fällen ist es vorteilhaft, den festen Stoffen Methylzellulose und/oder Fungizide beizumischen, was den Vorteil bringt, daß durch die Methylzellulose die Eisenpulverteilchen getragen werden, und daß durch den Zusatz von Fungiziden eine Schimmelbildung ausgeschlossen wird.

Erfindungsgemäß kann man zum Aufbau des schlauchförmigen Behälters flexible Kunststoffe verwenden,und ist es vorteilhaft, in dem einen und anderen Fall Hochdruckfolien von geringer Dicke, z. B. 0,05 mm stark, zu verwenden.

Nach einem weiteren erfindungsgemäßen Vorschlag wird an den Folienkappen ein als Dreieck geformter dünner Draht mit möglichst geringem Eigenmagnetismus so befestigt, daß ein Schenkel parallel zur Längsache des Behälters liegt. Auch andere geschlossene und ggf. offene Formen sind dabei anwendbar.

Durch das erfindungsgemäße Verfahren werden die bisherigen Schwierigkeiten, die bei der Anwendung eines magnetischen Prüfverfahrens auftreten, behoben. Das erfindungsgemäße Verfahren liefert ein Bild der Eisenpulververteilung, das an einem anderen, als dem Prüfort betrachtet und beurteilt werden

0080084

- 5 -

kann, denn ein solches Verteilungsbild kann über längere Zeit aufgehoben und/oder leicht bei normalem Licht fotografiert werden. Hinzu kommt, daß man ein derartiges Verteilungsbild, wenn man nach dem Vorschlag der Erfindung arbeitet, sowohl über als auch unter Wasser herstellen kann und daß zu der Herstellung derartiger Bilder keine Spezialisten gebraucht werden, sondern mit angelernten Arbeitern die Prüfung durchführbar ist, d.h. also, daß man das Verfahren mit jedem normal ausgebildeten Taucher ermöglichen kann. Es ist auch sehr wichtig, daß, wenn man nach dem erfindungsgemäßen Vorschlag arbeitet, keine besonderen Lichtquellen unter Wasser erforderlich sind, und auch eine aufwendige elektronische Einrichtung entfällt.

Schließlich ist darauf hinzuweisen, daß das so hergestellte Prüfdokument die Richtung der Feldlinien und die erforderliche Stärke des Magnetfeldes am Prüfort deutlich zeigt. Dazu dient ein Indikator, wie er im Rahmen der vorliegenden Erfindung vorgeschlagen wird.

Man kann, nach dem erfindungsgemäßen Verfahren auch sehr rasch arbeiten, denn ein solches Verteilungsbild kann in wenigen Minuten hergestellt werden, meistens in zwei bis drei Minuten. Schließlich ist festzuhalten, daß bei Verwendung der erfindungsgemäßen Einrichtung, unterschiedliche Abstände zur Oberfläche des zu prüfenden Bauteils vermieden werden und daher die gleiche Intensität für alle indizierten Fehler gegeben ist.

Weitere Merkmale der Erfindung ergeben sich aus der folgenden Beschreibung eines Ausführungsbeispiels einer Einrichtung zum Durchführen des erfindungsgemäßen Verfahrens. Hierzu wird auf die beigefügten Figuren verwiesen, die im einzelnen zeigen:

0080084

- 6 -

| | |
|---|---|
| Figur 1 | ist ein schlauchförmiger Behälter aus flexiblem Kunststoff, in Draufsicht, |
| Figur 2 | ein Schnitt nach der Linie A-A in Figur 1, |
| Figur 3 | in Draufsicht, ein Teil eines schlauchförmigen Behälters, nach durchgeführter Prüfung mit sichtbar gemachten angesammelten Eisenteilchen, |
| Figur 4 | ein Stück eines bandförmigen Behälters mit dort angebrachten Feldstärkenindikatoren, |
| Figur 5 | ein Schnitt nach der Linie B-B in Figur 4 und |
| Figur 6 | eine Teilansicht des Behälters mit den Indikatoren zur Kenntlichmachung der Empfindlichkeit der Prüfung. |

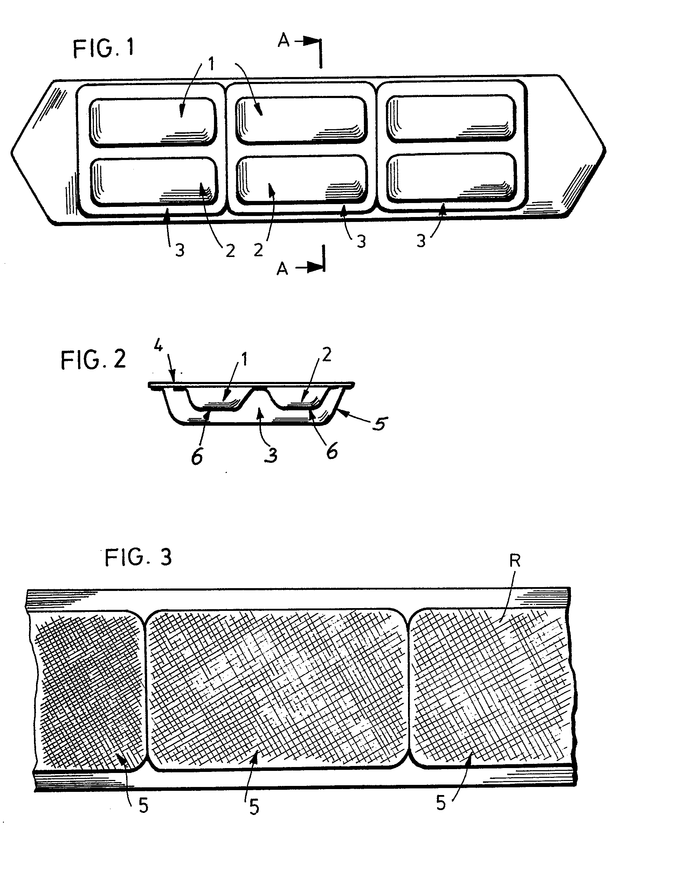

In Figur 1 ist ein Stück eines schlauchförmigen Behälters gezeigt, der nach dem Erfindung aus flexiblem Kunststoff aufgebaut ist, z.B. aus einer Hochdruckfolie aus Polyäthylen. Auf einer bandförmigen Folie 4 sind Folienkappen 5 mit ihren Rändern aufgeklebt oder aufgeschweißt, so daß sie mit der Folie 4 jeweils Kammern 3 bilden. Innerhalb der so gebildeten Kammern 3 sind durch ebenfalls auf die Folie 4 aufgesetze Folienkappen 6, zwei Kammern 1 und 2 gebildet, die zur Aufnahme eines Gemisches aus festen Stoffen bzw. aus Flüssigkeiten dienen. Zumindest die Folienkappen 5 sind aus transparenter Folie gebildet, wobei es gegebenenfalls auch

0080084

- 7 -

vorteilhaft ist, die beiden Folienkappen 6, die die Kammern 1 und 2 bilden, ebenfalls aus derartigen Folien herzustellen.

Mit Hilfe der auf die bandförmige Folie 4 aneinandergereihten Folienkappen 5 kann man einen schlauchförmigen Behälter herstellen, dessen Länge, je nach den Erfordernissen, verkleinert werden kann, indem man Stücke davon durch Schnitte zwischen den Rändern von zwei Kammern 3 herstellt. In die Kammern 1 bzw. 2 sind die Gemische von festen pulverisierten Stoffen bzw. von flüssigen Stoffen eingefüllt, wobei z.B. angenommen werden soll, daß in die Kammern 1 ein Gemisch fester Stoffe bestehend aus Calciumoxyd, Calciumsulfat, Zinkoxyd, Siliciumoxyd, Eisenpulver und Methylzellulose eingefüllt wurde. Gegebenenfalls sind auch fungizide Zusätze, zur Vermeidung von Schimmelbildung, in den Kammern. In die Kammern 2 werden dann die flüssigen Bestandteile eingefüllt, und zwar eine wässrige Lösung von Alkalisilikaten, Wasserstoffperoxyd, Phosphorsäure und Formaldehydlösung. Als Alkalisilikate kann man z.B. $Na_2Si_2O_5$ oder $K_2Si_2O_5$ verwenden. Je nach den jeweiligen Gegebenheiten kann man der Lösung zur Verdünnung Wasser beifügen, ehe sie in die Kammern 2 gefüllt wird.

Die Kammern 1 und 2 des schlauchförmigen Behälters werden kurz vor der Prüfung in einer entsprechenden Druckvorrichtung aufgebrochen, so daß sich die flüssigen und festen Bestandteile innig miteinander vermischen. Nun wird der schlauchförmige Behälter, in der gebrauchten Länge, ggfs.mit Hilfe einer Halterung,auf der zu untersuchenden Stelle befestigt und an die Oberfläche des Bauteils fest angedrückt. Infolge der Flexibilität dieses Behälters fügt sich die geschmeidige Masse den Unebenheiten der Oberfläche innig an. Wenn nun das Magnetfeld für die Prüfung eingeschaltet wird, wandern die in der Masse vorhandenen und gleichmäßig verteilten Eisenkörnchen,den Feldlinien folgend, zur Oberfläche des Prüflings

C080084

- 9 -

hin. Je nach der vorhandenen Feldstärke sammeln sich diese Teilchen dort und es entstehen an den Stellen, wo Feldlinien aus der Oberfläche austreten, wie bei der normalen Magnetpulverprüfung, die bekannten Raupen. Durch Verwendung des erfindungsgemäßen Behälters erhöht sich an diesen Stellen der Kontrast dadurch, daß viele Eisenkörner aus der unmittelbaren Umgebung zur Raupe hingezogen werden, so daß, gegenüber der fehlerfreien Fläche, eine hellere Stelle entsteht (siehe Figur 3). In dieser helleren Stelle wird die Ansammlung der Eisenteilchen in der Raupe deutlich sichtbar. Je nach dem Mischungsverhältnis von Calciumoxyd/Calciumsulfat und Alkalisilikat erstarrt die Masse in einer kürzeren oder längeren Zeit, wobei, je nach dem Mischungsverhältnis, Zeiten zwischen 1 Sekunde und 6 Minuten einstellbar sind. Ist die Masse erstarrt, dann kann keine Bewegung der Eisenteilchen mehr erfolgen, so daß das Verteilungsbild fixiert ist. An der Richtung der angesammelten Eisenteilchen kann die Wirkrichtung des Magnetfeldes zur Zeit der Prüfung abgelesen werden, wie aus Fig.3, Pfeil R entnommen werden kann.

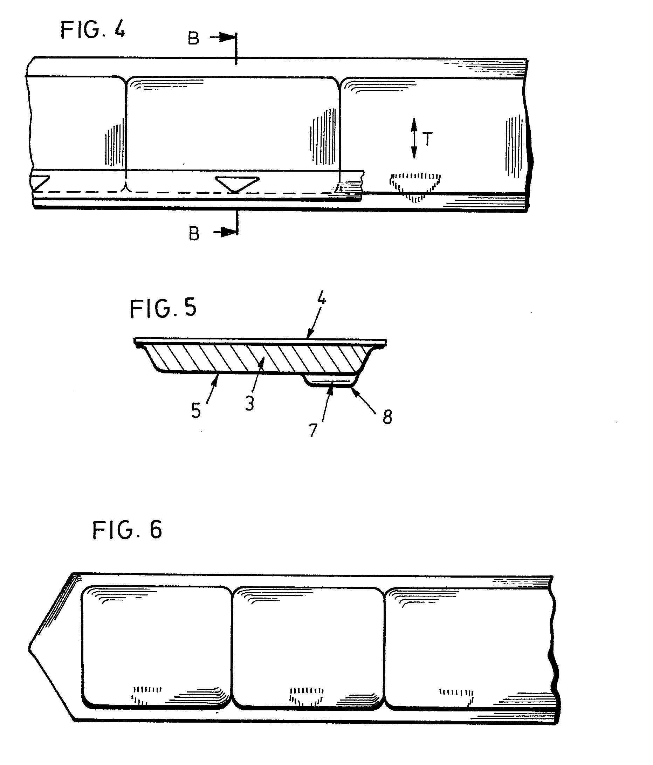

Um die Prüfung qualitätsmäßig zu sichern, legt man an der Außenseite des Behälters Feldstärkenindikatoren an, und zwar in Form von dünnen Drähten 7, die die Form eines Dreiecks haben. Man verwendet hier Drähte mit möglichst geringem Eigenmagnetismus und bringt diese dreieckigen Drähte so auf der Oberfläche der Kappe 5 an, daß der eine Schenkel parallel zur Längsachse des Behälters liegt, die anderen Schenkel daher in einem Winkel dazu (siehe Figur 4). Nun sammeln sich dann an diesen Drähten, wie bei einem Fehler, die Eisenteilchen an und wenn das Magnetfeld senkrecht zur Längsachse des Behälters steht, wird der parallele Schenkel auf seiner ganzen Länge Eisenpartikel ansammeln, während die anderen Schenkel weniger Partikel festhalten werden, da sie von der

- 9 -

idealen Feldlinien-Schnittrichtung abweichen. Die dreieckigen Drahtstücke werden mit Hilfe von Klebefolien 8 auf der Kappe 5 gesichert. In Figur 5 ist ein Schnitt nach der Linie B-B in Figur 4 dargestellt, um zu zeigen, wie diese Drähte angebracht sind. Nach erfolgter Magnetisierung wird der Klebestreifen mit den dreieckförmigen Drahtstücken von dem fest gewordenen schlauchförmigen Behälter abgezogen. Dadurch wird das um die Drähte gebildete Verteilungsbild sichtbar.

In Figur 4 rechts außen ist ein Verteilungsbild dargestellt und ein Pfeil T, der die Feldlinienrichtung angibt. Es ist klar, daß dann, wenn das Feld von der Senkrechten zur Längsachse verdreht wird, sich die Verhältnisse entsprechend ändern. Dabei wird außerdem erkennbar, welchen Abstand entlang der Längsachse, die Kammern während des Magnetisierungsvorganges hatten. Durch diese Anzeige erhält man eine Aussage über die Qualität der Prüfung. Wenn die Indikatoren 7 nicht erkennbar sind, so hat die Prüfung nicht die erforderliche Empfindlichkeit (siehe Figur 6) und muß gegebenenfalls wiederholt werden.

Klaus Henrichs GmbH

- 1 -

Patentansprüche

1) Verfahren zum Prüfen magnetisierbarer Bauteile auf Fehler, wobei auf die zu prüfenden Stellen der Bauteile ein magnetisierbare Teilchen enthaltender Träger aufgebracht wird, wonach im Bereich der zu prüfenden Stellen ein für die Prüfung vorgesehenes Magnetfeld angelegt wird, dadurch gekennzeichnet, daß die in getrennten Kammern eines den Träger verkörperten schlauchförmigen Behälters enthaltenen Gemische von festen pulverisierten Stoffen, nämlich ein Gemisch aus Calciumoxyd, Calciumsulfat, Zinkoxyd, Siliciumdioxyd und Eisenpulver, sowie von Flüssigkeiten, nämlich eine wässrige Lösung von Alkalisilikaten, Wasserstoffperoxyd, Phosphorsäure und Formaldehyd, nach Aufbrechen der Trennwände innig miteinander vermischt werden und daß die in den Kammern befindlichen flüssigen und festen Bestandteile in ihrem Mischungsverhältnis so bemessen sind, daß die festen und flüssigen Bestandteile in vorbestimmter Zeit erstarren und keine Bewegung der Eisenteilchen mehr erfolgen kann, so daß das Verteilungsbild dadurch fixiert und visuell direkt ablesbar wird.

2) Einrichtung zum Prüfen magnetisierbarer Bauteile auf Fehler, wobei auf die zu prüfenden Stellen der Bauteile ein magnetisierbare Teilchen enthaltender Träger aufgebracht ist und mit Mitteln zur Erzeugung eines Magnetfeldes im Bereich der zu prüfenden Stellen, dadurch gekennzeichnet, daß als Träger ein schlauchförmiger Behälter vorgesehen ist, aufgebaut aus einer bandförmigen Folie (4), auf der Folienkappen (5) aneinandergereiht angebracht sind, während innerhalb jeder so gebildeten Kammer (3), durch dort auf die Folie (4) aufgesetzte Folienkappen (6), zwei aufbrechbare Kammern (1, 2) vorgesehen sind und daß in den Kammern (1, 2, 3) die festen pulverisierten Stoffe, nämlich ein Gemisch aus Calciumoxyd, Calciumsulfat, Zinkoxyd, Siliciumdioxyd und Eisenpulver bzw. die Flüssigkeiten, nämlich eine

0080084

- 2 -

wässrige Lösung von Alkalisilikaten, Wasserstoffperoxyd, Phosphorsäure und Formaldehyd enthalten sind.

3) Einrichtung nach Anspruch 2, dadurch gekennzeichnet, daß den festen Stoffen Methylzellulose beigemischt ist.

4) Einrichtung nach Anspruch 2, dadurch gekennzeichnet, daß den festen Stoffen Fungizide beigemischt sind.

5) Einrichtung nach Anspruch 2, dadurch gekennzeichnet, daß zum Aufbau des schlauchförmigen Behälters flexible Kunststoffe Verwendung finden.

6) Einrichtung nach Anspruch 2 und 5, dadurch gekennzeichnet, daß Hochdruckfolien in geringer Dicke, z. B. 0,05 mm stark, Verwendung finden.

7) Einrichtung nach Anspruch 2 bis 6, dadurch gekennzeichnet, daß an den Folienkappen (5) ein als Dreieck geformter dünner Draht (7), mit möglichst geringem Eigenmagnetismus, so befestigt ist, daß ein Schenkel parallel zur Längsachse des Behälters liegt.

FIG. 1

A

1

2

2

3

3

3

A

FIG. 2

4

1

2

6

3

6

5

FIG. 3

R

5

5

5

2 / 2

FIG. 4

FIG. 5

FIG. 6

Europäisches
Patentamt

**EUROPÄISCHER RECHERCHENBERICHT**

Nummer der Anmeldung

EP 82 11 0117

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 01 N 27/84 |
| A | GB-A- 833 267 (J. DAYTON STEELE) <br> * Anspruch 1; Seite 1, Zeile 62 - Seite 2, Zeile 6 * | 1,2 | |
| | --- | | |
| A | Patent Abstracts of Japan Band 5, Nr. 56, 17. April 1981 <br> & JP-A-56-11352 | 1,2 | |
| | --- | | |
| A | GB-A-1 602 643 (KINS DEVELOPMENTS LTD.) <br> * Ansprüche 1, 2; Seite 2, Zeilen 104-130; Figuren 1, 2 * | 1,2 | |
| | --- | | |
| P,A | GB-A-2 079 945 (MAGNAFLUX CORP.) <br> * Anspruch 1; Zusammenfassung * | 1,2 | RECHERCHIERTE SACHGEBIETE (Int. Cl. ³) |
| | --- | | |
| A | WO-A-8 001 417 (INSTITUT RADIOTEKHNIKI I RADIOELEKTRONIKI) <br> * Zusammenfassung; Figur * | 1,2 | G 01 N 21/88 <br> G 01 N 27/00 <br> G 01 R 33/10 |
| | --- | | |
| A | MATERIALS EVALUATION, September 1973 J.E. HALKIAS et al. "MȷRI - Help for some difficult NDT Problems" Seiten 179-184 <br> * Seite 179, Kapitel " introduction" und Zusammenfassung; Figuren 1, 3 * | 1 | |
| | ----- | | |

Der vorliegende Recherchenbericht wurde für alle Patentansprüche erstellt.

| Recherchenort <br> BERLIN | Abschlußdatum der Recherche <br> 04-02-1983 | Prüfer <br> HOFMANN D G |
|---|---|---|